# EUROPEAN PATENT APPLICATION

(11) **EP 2 784 744 A1**
(43) Date of publication of application: **01.10.2014**
(21) Application number: 12851637.4
(22) Date of filing: 19.11.2012
(51) Int. Cl.: G06Q 50/30, B60K 1/04, B60L 11/18, H01M 10/44, H01M 10/48, H02J 7/00

(54) **VEHICLE MANAGEMENT SYSTEM**

(30) Priority: 22.11.2011 JP 2011254670
(71) Applicant: Panasonic Corporation, Osaka 571-8501 (JP)
(72) Inventor: MURAYAMA, Kei, Osaka-shi, Osaka 540-6207 (JP)
(74) Representative: Appelt, Christian W.
(86) International application number: PCT/JP2012/007406
(87) International publication number: WO 2013/076953

(57) **Abstract**

A vehicle management system that manages a plurality of electric vehicles includes state detecting means for detecting deteriorated states of the plurality of electric vehicles and order-of-use deciding means for deciding an order of use of the electric vehicles so that the electric vehicles can be placed ahead more in the order of use as such detected deteriorated states of EV storage batteries of the electric vehicles are smaller.

## Description

### TECHNICAL FIELD

The present invention relates to a vehicle management system that manages use of a plurality of electric vehicles.

### BACKGROUND ART

In Patent Literature 1, an electric vehicle sharing system is described. This electric vehicle sharing system shares a plurality of electric vehicles. This electric vehicle sharing system recognizes states and positions of electric vehicles, which are connected to charge posts, by a management server. The electric vehicle sharing system receives a reservation from a cellular phone of a user, and posts a reservation receiving result to the user. In such a way, the user can reserve such an electric vehicle connected to the charge post, and can use the electric vehicle in accordance with the reservation.

However, in the above-mentioned electric vehicle sharing system, each of the electric vehicles connected to the charge posts is always charged, and the electric vehicle is put on standby in a substantially full charge state. Moreover, this electric vehicle sharing system does not intend to discharge power from the electric vehicle. Hence, in this electric vehicle sharing system, what is regarded as a problem is a deterioration of a lifetime of a storage battery, which may be caused by maintaining the storage battery of the electric vehicle in the full charge state for a long time.

Moreover, in this electric vehicle sharing system, if there are variations in frequency of use among the respective electric vehicles, then there occurs a problem regarding the lifetime of each of such storage batteries. In a case of an electric vehicle in which the frequency of use is low, a time while the storage battery is being left standing in the full charge state becomes longer than those of other electric vehicles, and there progresses the deterioration of the lifetime of the storage battery. Meanwhile, also in a case where a specific electric vehicle is used with a high frequency of use, there is a possibility that a bias may occur among the lifetimes of the storage batteries mounted on the respective electric vehicles.

In this connection, the present invention is proposed in consideration of the above-mentioned actual circumstances. It is an object of the present invention to provide a vehicle management system capable of suppressing the variations among the lifetimes of the storage batteries in the plurality of electric vehicles.

### CITATION LIST

### PATENT LITERATURE

[Patent Literature 1] Japanese Patent Laid-Open Publication No. 2002-369315

### SUMMARY OF INVENTION

A vehicle management system according to a first aspect of the present invention is a vehicle management system that manages a plurality of electric vehicles, including: state detecting means for detecting deteriorated states of storage batteries of the plurality of electric vehicles; order-of-use deciding means for deciding an order of use of the electric vehicles so that the electric vehicles can be placed ahead more in the order of use as the deteriorated states of the storage batteries of the electric vehicles are smaller, the deteriorated states being detected by the state detecting means; and charge level deciding means for deciding charge levels of the storage batteries of the respective electric vehicles in response to the deteriorated states detected by the state detecting means or to the order of use, the order being decided by the order-of-use deciding means.

A vehicle management system according to a second aspect of the present invention is the vehicle management system according to the first aspect, characterized in that the charge level deciding means decides charge levels of electric vehicles in which the deteriorated states detected by the state detecting means are large or charge levels of electric vehicles placed behind in the order of use, the order being decided by the order-of-use deciding means, within a predetermined range.

A vehicle management system according to a third aspect of the present invention is the vehicle management system according to either of the first and second aspects, characterized in that the charge level deciding means decides charge levels of electric vehicles in which the deteriorated states detected by the state detecting means are small or charge levels of electric vehicles placed ahead in the order of use, the order being decided by the order-of-use deciding means, at a predetermined value or more.

A vehicle management system according to a fourth aspect of the present invention is the vehicle management system according to either of the second and third aspects, further including: a load instrument, characterized in that power discharged for maintaining the charge levels of the storage batteries within the predetermined range is supplied to the load instrument.

A vehicle management system according to a fifth aspect of the present invention is the vehicle management system according to either of the second and third aspects, further including: a power generation device, characterized in that discharge power to the storage batteries, the discharge power being for maintaining the charge levels of the storage batteries within the predetermined range or at the predetermined value or more, is supplied from the power generation device.

A vehicle management system according to a sixth aspect of the present invention is the vehicle management system according to either of the second and third aspects, further including: a stationary storage battery fixed to a predetermined position, characterized in that power for maintaining the charge levels of the storage batteries within the predetermined range or at the predetermined value or more is charged/discharged by the stationary storage battery.

### BRIEF DESCRIPTION OF DRAWINGS

FIG. 1 is a block diagram of a vehicle management system shown as an embodiment of the present invention.
FIG. 2 is a flowchart showing processing for deciding an order of use of electric vehicles in the vehicle management system shown as the embodiment of the present invention.
FIG. 3 is a flowchart showing entire operations in the vehicle management system shown as the embodiment of the present invention.
FIG. 4 is a flowchart showing operations when charge/discharge is performed so that charge levels of the electric vehicles can reach a target value in the vehicle management system shown as the embodiment of the present invention.
FIG. 5 is a flowchart showing other operations in a whole of the vehicle management system shown as the embodiment of the present invention.
FIG. 6 is a flowchart showing other operations when the charge/discharge is performed so that the charge levels of the electric vehicles can reach the target value in the vehicle management system shown as the embodiment of the present invention.
FIG. 7 is a block diagram showing another configuration of the vehicle management system shown as the embodiment of the present invention.
FIG. 8 is a flowchart showing other operations when the charge/discharge is performed so that the charge levels of the electric vehicles can reach the target value in the vehicle management system shown as the embodiment of the present invention.
FIG. 9 is a block diagram showing another configuration of the vehicle management system shown as the embodiment of the present invention.
FIG. 10 is a block diagram showing another configuration of the vehicle management system shown as the embodiment of the present invention.

### DESCRIPTION OF EMBODIMENTS

A description is made below of embodiments of the present invention with reference to the drawings.

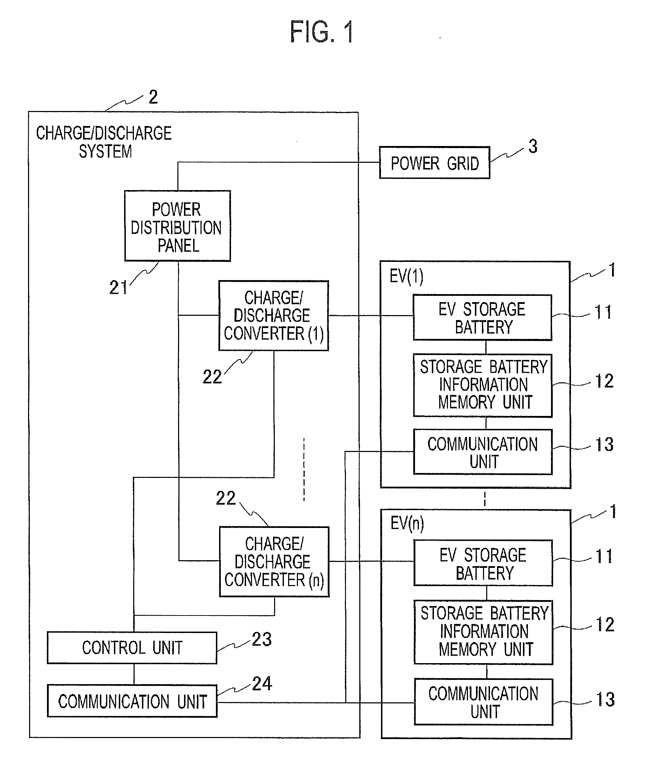

A vehicle management system shown as an embodiment of the present invention is configured, for example, as shown in FIG. 1. This vehicle management system includes: a plurality of electric vehicles (EV) 1 to which a number (1) to an arbitrary number (n) are assigned; and a charge/discharge system 2. The charge/discharge system 2 is connected to a power grid 3. In this vehicle management system, the electric vehicles 1 are electrically connected to the charge/discharge system 2 through power cables.

This vehicle management system is, for example, a system for allowing an indefinite number of users to share the plurality of electric vehicles 1. For example, the plurality of electric vehicles 1 are prepared in order to be shared, and are parked in a parking facility. In a state of being parked in the parking facility, the respective electric vehicles 1 are connected to the charge/discharge system 2. In such a way, charge states of the respective electric vehicles 1 are controlled by the charge/discharge system 2. Then, the vehicle management system performs processing such as permission of use for a user who desires to use the electric vehicle 1. At this time, the vehicle management system can also display/post an electric vehicle 1 desired to be offered for preferential use.

A description is made below of a specific configuration of this vehicle management system.

In the vehicle management system, the charge/discharge system 2 is supplied with power (hereinafter, referred to as grid power) from the power grid 3. The charge/discharge system 2 supplies the grid power, which is supplied thereto, to the plurality of electric vehicles 1.

Each of the electric vehicles 1 includes: an EV storage battery 11; a storage battery information memory unit 12; and a communication unit 13.

The EV storage battery 11 is a storage battery mounted on the electric vehicle 1. The EV storage battery 11 stores power for allowing the electric vehicle 1 to run. This power is supplied from the charge/discharge system 2, is stored in the EV storage battery 11, and is consumed in response to the running of the electric vehicle 1. Moreover, the electric vehicle 1 is capable of being charged with this power also at a power station other than the charge/discharge system 2.

The storage battery information memory unit 12 memorizes information regarding a deterioration of the EV storage battery 11 as storage battery information of the EV storage battery 11. The storage battery information memory unit 12 memorizes a present charge level (for example, SOC: State of Charge). For this purpose, the storage battery information memory unit 12 updates the charge level in response to charge and discharge with the EV storage battery 11.

Moreover, the storage battery information memory unit 12 may memorize charge/discharge history information, which indicates a change of the charge level, as the storage battery information of the EV storage battery 11. For this purpose, the storage battery information memory unit 12 memorizes a charge level for each predetermined time. Furthermore, the storage battery information memory unit 12 may include a history of a depth of discharge, a history of a charge/discharge capacity and a history of a charge/discharge rate as the charge/discharge history information regarding the EV storage battery 11. The depth of discharge is a value indicating a degree of discharge from a full charge state. The charge/discharge/rate is a charge/discharge capacity per unit time.

Moreover, the storage battery information memory unit 12 may memorize an internal resistance of the EV storage battery 11 as the storage battery information of the EV storage battery 11. In this case, it is necessary for the electric vehicle 1 to include an internal resistance measuring device of the EV storage battery 11.

Furthermore, the storage battery information memory unit 12 may memorize an accumulated running distance as an index indicating the deterioration of the EV storage battery 11.

The communication unit 13 transfers a communication signal with a communication unit 24 of the charge/discharge system 2. The communication unit 13 transmits the charge level, which is memorized in the storage battery information memory unit 12, to the communication unit 24 of the charge/discharge system 2. The communication unit 13 and the communication unit 24 may communicate with each other through a communication cable built in the power cable that connects the electric vehicle 1 and the charge/discharge system 2 to each other, or may communicate with each other by wireless communication.

The charge/discharge system 2 includes: a power distribution panel 21; a plurality of charge/discharge converters 22 to which the number (1) to the arbitrary number (n) are assigned; a control unit 23; and the communication unit 24.

The charge/discharge converters 22 are electrically connected to the electric vehicles 1 through the power cables. The charge/discharge converters 22 with the number (1) to the number (n) correspond to the electric vehicles 1 with the number (1) to the number (n), respectively.

Each of the charge/discharge converters 22 transfers power with the electric vehicle 1, which corresponds thereto, in accordance with control of the control unit 24 in a case of being connected to the electric vehicle 1 concerned. The charge/discharge converter 22 includes a DC-DC conversion circuit and an AC-DC conversion circuit. The charge/discharge converter 22 performs AC/DC conversion between a voltage suitable for the charge/discharge system 2 and a voltage suitable for the EV storage battery 11 of the electric vehicle 1. For example, the voltage suitable for the charge/discharge system 2 is an alternating current voltage of 100V. For example, such a voltage suitable for the charge/discharge of the EV storage battery 11 in the electric vehicle 1 is a direct current voltage of 300V to 400V.

The power distribution panel 21 is connected to the power grid 3 and the charge/discharge converter 22. The power distribution panel 21 includes a branch circuit, a relay, a circuit breaker and the like. In a case of charging the EV storage battery 11 of the electric vehicle 1, the power distribution panel 21 supplies power to the charge/discharge converter 22.

Note that a solar cell or a fuel cell may be connected to the power distribution panel 21. In a case where power is generated by the solar cell or the fuel cell, the power distribution panel 21 can branch the power to the charge/discharge converter 22.

The control unit 23 manages the power transferred between the charge/discharge system 2 and the electric vehicle 1. The communication unit 24 is connected to the control unit 23. The control unit 23 decides an order of use of the plurality of electric vehicles 1 based on deteriorated states of the EV storage batteries 11 in the respective electric vehicles 1, the deteriorated states corresponding to the charge levels of the EV storage batteries 11 concerned.

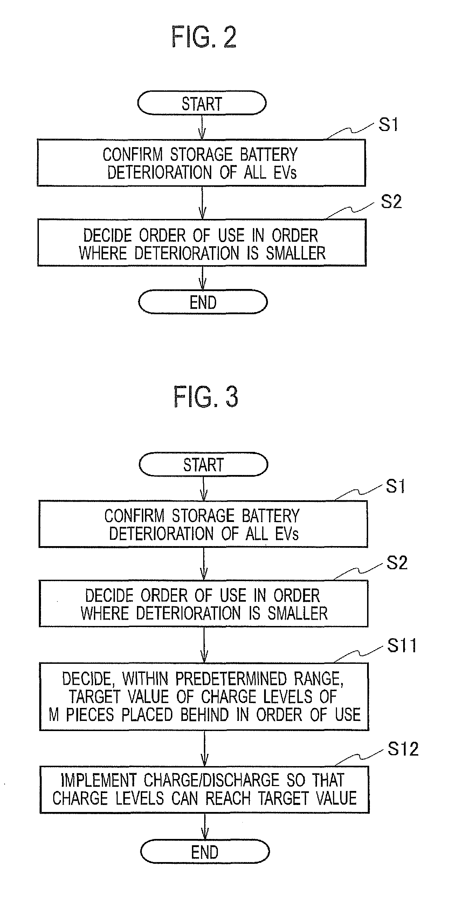

The control unit 23 in this vehicle management system performs processing shown in FIG. 2. First, in Step S1, the control unit 23 detects (confirms) the deteriorated states of the EV storage batteries 11 of all of the electric vehicles 1 (state detecting means).

As a detection method of the deteriorated states of the EV storage batteries 11 in this Step S1, for example, any of (A) to (C) to be described below is mentioned; however, the detection method may be arbitrary methods besides these.
(A) The control unit 23 may determine the deteriorated states of the EV storage batteries 11 based on such accumulated running distances of the electric vehicles 1. The control unit 23 determines that the EV storage batteries 11 are deteriorated more as the accumulated running distances of the electric vehicles 1 are longer.
(B) The control unit 23 may determine the deteriorated states of the EV storage batteries 11 based on such internal resistances of the EV storage batteries 11. The control unit 23 determines that the EV storage batteries 11 are deteriorated more as the internal resistances of the EV storage batteries 11 are higher. For example, the control unit 23 can determine the deteriorated states of the EV storage batteries 11 based on values, which are obtained by measuring the internal resistances, by using a phenomenon that a capacity of a lead storage battery becomes 80% or less and 70% or less of a nominal capacity thereof when an internal resistance of the lead storage battery reaches 150% and 200% of an initial value thereof, respectively.
(C) The control unit 23 may determine the deteriorated states of the EV storage batteries 11 based on such charge/discharge histories of the EV storage batteries 11. The control unit 23 can determine the deteriorated states of the EV storage batteries 11 based on the histories of the depths of discharge, the histories of the charge/discharge capacities, and the histories of the charge/discharge rates. In a case where there is a history in which the depth of charge is extremely high, the control unit 23 can determine that the EV storage battery 11 concerned is deteriorated. In a case where there is a history in which an accumulated charge/discharge capacity is high, the control unit 23 can determine that the EV storage battery 11 concerned is deteriorated. In a case where there is a history in which the charge/discharge rate is high, the control unit 23 can determine that the EV storage battery 11 concerned is deteriorated.

In the next Step S2, the control unit 23 decides such an order of using the electric vehicles 1 based on the deteriorated states of the EV storage batteries 11, which are confirmed in Step S1. At this time, the control unit 23 decides such an order of use so that, as the deteriorated state of the EV storage battery 11 is smaller, the electric vehicle 1 can be placed ahead more in the order of use (order-of-use deciding means).

As described above, in accordance with this vehicle management system, the electric vehicle 1 is placed ahead more in the order of use as the deterioration of the electric vehicle 1 is smaller, and accordingly, variations among lifetime deteriorations of the EV storage batteries 11 in the plurality of electric vehicles 1 can be suppressed.

Moreover, desirably, this vehicle management system decides the charge levels of the EV storage batteries 11 of the respective electric vehicles 1 in response to the detected deteriorated states of the EV storage batteries 11 or to the decided order of use thereof (charge/discharge level deciding means). In a case where the electric vehicle 1 is placed behind in the decided order of use, the control unit 23 in this vehicle management system lowers the charge level of the EV storage battery 11. When the EV storage battery 11 is left standing in a state where the charge level of the EV storage battery 11 is low, a degree of the deterioration corresponding to an elapsed time can be suppressed in comparison with a case where the EV storage battery 11 is left standing in a state where the charge level is high.

For this purpose, the control unit 23 acquires the charge levels of the EV storage batteries 11 from the storage battery information memory units 12 of the electric vehicles 1 through the communication unit 13 and the communication unit 24. In the case where the electric vehicle 1 is placed behind in the order of use among the plurality of electric vehicles 1, the control unit 23 lowers the charge level of the EV storage battery 11. Specifically, the control unit 23 prohibits an operation of newly charging the EV storage battery 11 from the charge/discharge converter 22.

In such a way, in accordance with the vehicle management system, with regard to the electric vehicle 1 placed behind in the order of use, the charge level thereof can be lowered after the order of use of the respective electric vehicles 1 is decided, and accordingly, the deterioration of the lifetimes of the EV storage batteries 11, which is caused by that the EV storage batteries 11 are left standing for a long period, can be reduced.

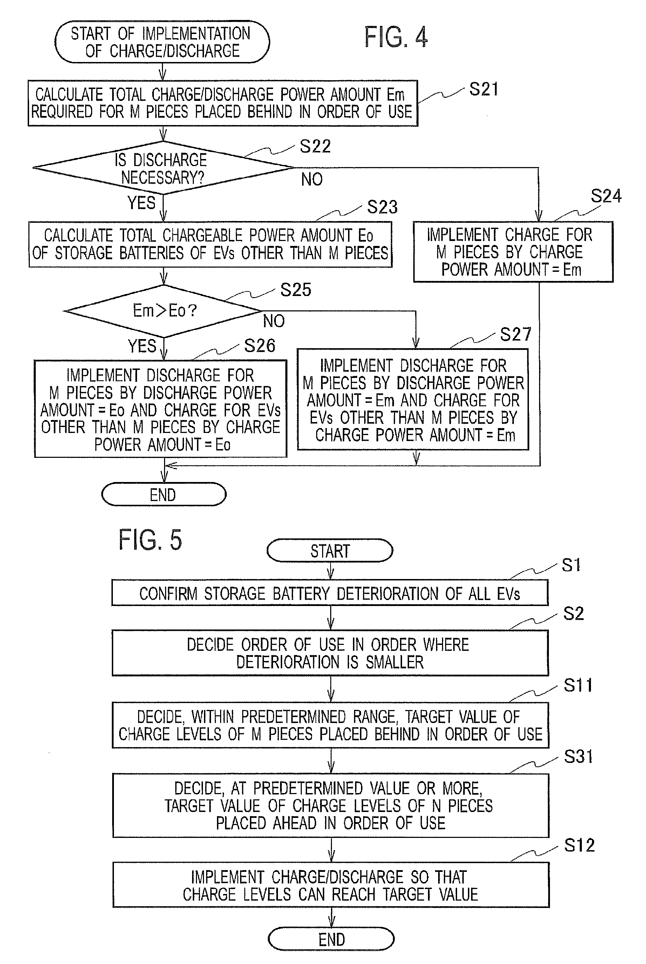

The vehicle management system that decides the charge level as described above operates, for example, as shown in FIG. 3 and FIG. 4.

As shown in FIG. 3, in a similar way to the above, the control unit 23 decides the order of use of the electric vehicle 1 by Step S1 and Step S2.

Thereafter, in Step S11, the control unit 23 decides, within a predetermined range, a target value of a charge level of M pieces of the electric vehicles 1 placed behind in the order of use. That is to say, the vehicle management system decides the charge levels of the electric vehicles 1, in which the deteriorated states are large, within the predetermined range. Moreover, even if the electric vehicles 1 are not placed behind in the order of use, the control unit 23 may decide the charge levels of the electric vehicles 1, in which the deteriorated states of the EV storage batteries 11 are large, within the predetermined range. For example, in a case where the deteriorated states are large over almost all of the plurality of electric vehicles 1, desirably, the charge level is decided within the predetermined range even if the electric vehicles 1 are not placed behind in the order of use.

This predetermined range of the target value of the charge level is defined by an upper limit value and lower limit value of the charge level in a case where a progress of the deterioration of the EV storage batteries 11 is relatively gentle by the fact that the EV storage batteries 11 are left standing. This predetermined range of the target value of the charge level is preset by a value of an experiment using the EV storage batteries 11, and the like.

In Step S12, the charge/discharge system 2 implements the charge/discharge for the EV storage batteries 11 so that the charge levels can reach the target value. At this time, the control unit 23 implements the charge/discharge for the electric vehicles 1 in each of which the charge level is decided to be within the preset predetermined range of the target value of the charge level in Step S11. In such a way, the charge/discharge converters 22, which correspond to the electric vehicles 1 in which the charge/discharge levels are controlled, perform the charge/discharge for the EV storage batteries 11 of the electric vehicles 1 to which the charge/discharge converters 22 correspond.

An operation of this Step S12 is illustrated as shown in FIG. 4.

First, in Step S21, the control unit 23 calculates a total charge/discharge power amount value Em required for the M pieces of the electric vehicles 1 placed behind in the order of use. At this time, first, the control unit 23 refers to the order of use of the electric vehicles 1, which is decided in Step S2, and extracts the M pieces of the electric vehicles 1 placed behind in the order of use. Next, the control unit 23 acquires such present charge levels from the storage battery information memory units 12 of the extracted M pieces of the electric vehicles 1. Next, the control unit 23 compares the charge levels of the respective electric vehicles 1 with the predetermined range of the target value of the charge level, and calculates charge power amounts or discharge power amounts, which are required for the respective electric vehicles 1. Next, the control unit 23 sums up the required charge power amounts as positive values and the required discharge amounts as negative values, and thereby calculates the total charge/discharge power amount value Em required for the M pieces of the electric vehicles 1 placed behind in the order of use.

In the next Step S22, the control unit 23 refers to the total charge/discharge power amount value Em, which is required for the M pieces of the electric vehicles 1 placed behind in the order of use and is calculated in Step S21, and determines whether or not it is necessary to discharge the EV storage batteries 11. In a case where the required total charge/discharge power amount value Em is negative, the control unit 23 determines that it is necessary to discharge the EV storage batteries 11, and advances the processing to Step S23. Meanwhile, in a case where the required total charge/discharge power amount value Em is positive, the control unit 23 determines that it is not necessary to discharge the EV storage batteries 11, and advances the processing to Step S24.

In Step S24, the charge/discharge system 2 implements the charge for the M pieces of the electric vehicle 1, which are placed behind in the order of use, by the required total charge power amount Em calculated in Step S21. At this time, the charge/discharge system 2 allows the electric vehicles 1, in which the present charge levels are higher than the predetermined range, to perform the discharge so that the charge levels can reach the predetermined range. The charge/discharge converters 22, which correspond to the electric vehicles 1 which have performed the discharge, supply the discharged power to the charge/discharge converters 22, which correspond to the electric vehicles 1 required to be charged. The charge/discharge converters 22, which correspond to the electric vehicles 1 required to be charged, charge the discharge power, which is supplied from the other charge/discharge units 22, to the electric vehicles 1 corresponding thereto. In such a way, the electric vehicles 1, in which the present charge levels are lower than the predetermined range, can charge the power from the charge/discharge converters 22 corresponding thereto to the EV storage batteries 11, and can set the charge levels within the predetermined range.

In Step S23, the control unit 23 calculates a total chargeable power amount value Eo of the EV storage batteries 11 of the M pieces of the electric vehicles 1 placed behind in the order of use. First, the control unit 23 refers to the order of use of the electric vehicles 1, which is decided in Step S2, and extracts the electric vehicles 1 other than the M pieces thereof placed behind in the order of use. Next, the control unit 23 acquires the present charge levels from the storage battery information memory units 12 of the extracted electric vehicles 1 other than the M pieces concerned. Next, the control unit 23 refers to the present charge levels, confirms pieces of chargeable power of the electric vehicles 1 other than the M pieces placed behind in the order of use, and calculates the total value Eo of the pieces of the chargeable power.

In the next Step S25, the control unit 23 compares the total value Eo of the chargeable power, which is calculated in Step S23, and the total charge/discharge power amount value Em, which is calculated in Step S21, with each other.

In a case where the total charge/discharge power amount value Em is higher than the total value Eo of the chargeable power, then the processing is advanced to Step S26. In Step S26, the M pieces of the electric vehicles 1 placed behind in the order of use implement the discharge by a discharge power amount Eo. Meanwhile, the electric vehicles 1 other than the M pieces thereof placed behind in the order of use implement the charge by a charge power amount Eo.

In such a way, in a case where the discharge power amount required for setting the charge levels of the M pieces of the electric vehicles 1, which are placed behind in the order of use, within the predetermined range, then the vehicle management system allows the electric vehicles 1 concerned to discharge power of which amount is as large as possible. In such a way, this vehicle management system can reduce the lifetime deterioration of the EV storage batteries 11, which is caused by that the EV storage batteries 11 are left standing for a long period, as much as possible.

In a case where the total charge/discharge power amount value Em is lower than the total value Eo of the chargeable power, then the processing is advanced to Step S27. In Step S27, the M pieces of the electric vehicles 1 placed behind in the order of use implement the discharge by the total charge/discharge power amount value Em. Meanwhile, the electric vehicles 1 other than the M pieces thereof placed behind in the order of use implement the charge by setting the charge power amount at Em.

In such a way, the vehicle management system can charge all of the discharge power amounts required for setting the charge levels of the M pieces of the electric vehicles 1, which are placed behind in the order of use, within the predetermined range, to the other electric vehicles 1. In such a way, the vehicle management system can reduce the lifetime deterioration of the EV storage batteries 11, which is caused by that the EV storage batteries 11 are left standing for a long period.

As described above, in accordance with this vehicle management system, the charge levels of the EV storage batteries 11 of the respective electric vehicles 1 are decided in response to the deteriorated states of the EV storage batteries 11 or to the order of use of the electric vehicles 1. In such a way, the deterioration of the EV storage batteries 11 of the electric vehicles 1, which are placed behind in the order of use and are expected to be left standing for a long time, is reduced, and accordingly, the charge levels of the EV storage batteries 11 can be set within the predetermined range, and the lifetime deterioration of the storage batteries of the electric vehicles, which is caused by that the storage batteries are left standing for a long period, can be reduced.

Next, a description is made of other operations by the above-mentioned vehicle management system.

As shown in FIG. 5, after deciding in Step S11 that the target value of the charge levels of the M pieces of the electric vehicles 1, which are placed behind in the order of use, is set within the predetermined range, this vehicle management system advances the processing to Step S31. In Step S31, a target value of charge levels of N pieces of the electric vehicles 1, which are placed ahead in the order of use, is decided to be a predetermined value or more. Moreover, even if the electric vehicles 1 are not placed ahead in the order of use, the control unit 23 may decide the charge levels of the electric vehicles 1, in which the deteriorated states of the EV storage batteries 11 are small, within the predetermined range. For example, in a case where the deteriorated states are small over almost all of the plurality of electric vehicles 1, the charge levels may be decided at the predetermined value or more even if the electric vehicles 1 are not placed ahead in the order of use.

In Step S12 that follows, the charge/discharge system 2 implements the charge/discharge for the EV storage batteries 11 so that the charge levels can reach the target value.

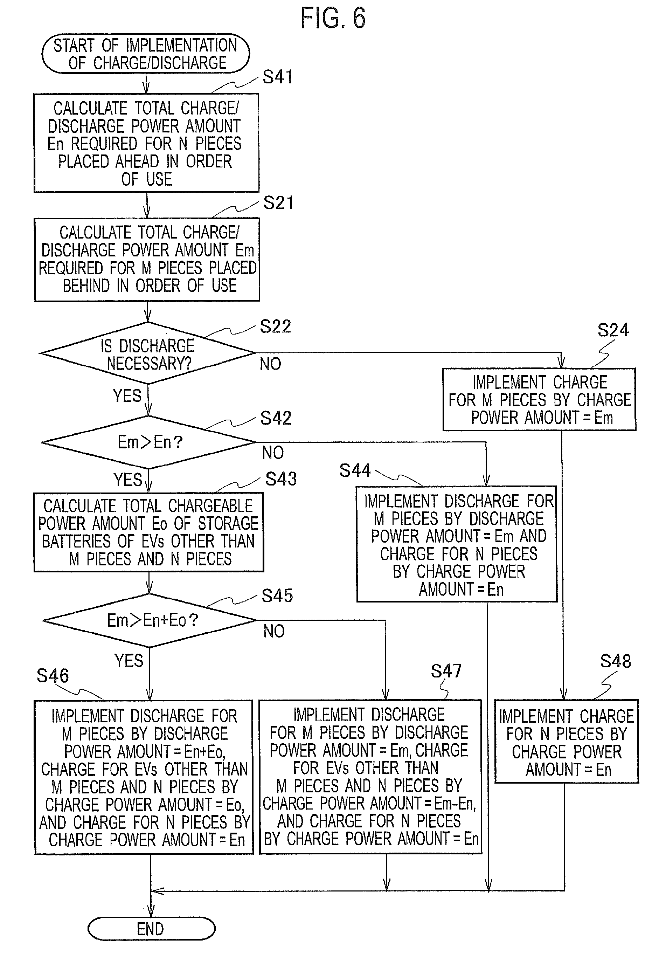

An operation of this Step S12 is illustrated as shown in FIG. 6.

First, in Step S41, the control unit 23 calculates a total charge amount value En required for the N pieces of the electric vehicles 1 placed ahead in the order of use. At this time, first, the control unit 23 refers to the order of use of the electric vehicles 1, and extracts the N pieces of the electric vehicles 1 placed ahead in the order of use. Next, the control unit 23 acquires the present charge levels from the storage battery information memory units 12 of the extracted N pieces of the electric vehicles 1. Next, the control unit 23 compares the charge levels of the respective electric vehicles 1 and the predetermined value of the charge levels, which is decided in Step S31, with each other, and calculates the charge power amounts required for the respective electric vehicles 1. Next, the control unit 23 sums up the required charge power amounts, and thereby calculates the total charge amount value En required for the n pieces of the electric vehicles 1 placed ahead in the order of use.

In the next Step S21, the control unit 23 calculates the total charge/discharge power amount value Em required for the M pieces of the electric vehicles 1 placed behind in the order of use.

In the next Step S22, the control unit 23 refers to the total charge/discharge power amount value Em, which is required for the M pieces of the electric vehicles 1 placed behind in the order of use and is calculated in Step S21, and determines whether or not it is necessary to discharge the EV storage batteries 11. In a case where it is necessary to discharge the EV storage batteries 11, then the processing processed to Step S42. Meanwhile, in a case where it is not necessary to discharge the EV storage batteries 11, the processing is advanced to Step S24.

In Step S42, the control unit 23 compares the total charge amount value En, which is calculated in Step S41, and the total charge/discharge power amount value Em, which is calculated in Step S21, with each other.

In a case where the total charge/discharge power amount value Em is lower than the total charge amount value En, the processing is advanced to Step S44. In Step S44, the vehicle management system sets the discharge power amounts of the M pieces of the electric vehicles 1, which are placed behind in the order of use, at Em, and implements the discharge therefor, and at the same time, sets the charge power amounts of the N pieces of the electric vehicles 1, which are placed ahead in the order of use, at En, and implements the charge therefor. The discharge power Em from the M pieces of the electric vehicles 1 placed behind in the order of use is supplied to the N pieces of the electric vehicles 1 placed ahead in the order of use, and a shortfall with respect to the charge power amount En is supplied from the power grid 3. In such a way, the vehicle management system can shift the charge levels of the M pieces of the electric vehicles 1, which are placed behind in the order of use, to the predetermined range, and can reduce the lifetime deterioration of the EV storage batteries 11, which is caused by that the EV storage batteries 11 are left standing for a long period. Moreover, by the charge for the N pieces of the electric vehicles 1, the charge levels of the N pieces of the electric vehicles 1 can be increased to the predetermined value.

In a case where the total charge/discharge power amount value Em is higher than the total charge power amount value En, the processing is advanced to Step S43. In Step S43, the control unit 23 calculates a total value Eo of pieces of the chargeable power of the EV storage batteries 11 of the electric vehicles 1 other than the M pieces of the electric vehicles 1 placed behind in the order of use and the N pieces of the electric vehicles 1 placed ahead in the order of use. At this time, first, the control unit 23 refers to the order of use of the electric vehicles 1, and extracts the electric vehicles 1 other than the M pieces and N pieces of the electric vehicles 1. Next, the control unit 23 acquires the present charge levels from the storage battery information memory units 12 of the extracted electric vehicles 1. Next, the control unit 23 refers to the present charge levels, confirms pieces of chargeable power of the electric vehicles 1 other than the M pieces and N pieces thereof, and calculates the total value Eo of the pieces of the chargeable power.

In the next Step S45, the control unit 23 compares the total charge/discharge power amount value Em calculated in Step S21 and a sum of the total charge power amount value En calculated in Step S41 and the total value Eo of the chargeable power, which is calculated in Step S43, with each other.

In a case where the required total charge/discharge power amount value Em is higher than the sum of the total charge amount value En and the total value Eo of the chargeable power, then the processing is advanced to Step S46.

In Step S46, such a sum of the total charge power amount value En and the total value Eo of the chargeable power is defined as a discharge power amount, and is discharged by the M pieces of the electric vehicles 1. In such a way, the vehicle management system can shift the charge levels of the M pieces of the electric vehicles 1, which are placed behind in the order of use, to the predetermined range, as much as possible, and can reduce the lifetime deterioration of the EV storage batteries 11, which is caused by that the EV storage batteries 11 are left standing for a long period. Meanwhile, the vehicle management system charges the electric vehicles, which are other than the M pieces of the electric vehicles 1, by the discharge power of the M pieces thereof. Power of the total value Eo of the chargeable power is charged to the electric vehicles 1 other than the M pieces of the electric vehicles 1 and the N pieces of the electric vehicles 1, and in addition, the charge power is set at the total charge power amount value En, and the charge is implemented for the N pieces of the electric vehicles 1. In such a way, the vehicle management system can increase the charge levels of the N pieces of the electric vehicles 1 to the predetermined value by the charge for the N pieces of the electric vehicles 1.

In a case where the required total charge/discharge power amount value Em is lower than the sum of the total charge power amount value En and the total value Eo of the chargeable power, then the processing is advanced to Step S47. In Step S47, the total charge/discharge power amount value Em is defined as the discharge power amount, and the discharge is implemented from the M pieces of the electric vehicles 1. In such a way, the vehicle management system can shift the charge levels of the M pieces of the electric vehicles 1, which are placed behind in the order of use, to the predetermined range, and can reduce the lifetime deterioration of the EV storage batteries 11, which is caused by that the EV storage batteries 11 are left standing for a long period. Meanwhile, the vehicle management system charges the electric vehicles, which are other than the M pieces of the electric vehicles 1, by the discharge power of the M pieces thereof. Power obtained by subtracting the total charge power amount value En from the required total charge/discharge power amount value Em is charged for the electric vehicles 1 other than the M, and in addition, the charge power is set at the total charge power amount value En, and the charge is implemented for the N pieces of the electric vehicles 1. In such a way, the vehicle management system can increase the charge levels of the N pieces of the electric vehicles 1 to the predetermined value by the charge for the N pieces of the electric vehicles 1.

In a case where it is not necessary to discharge the EV storage batteries 11, the charge for the M pieces of the electric vehicles placed behind in the order of use is implemented in Step S24, and thereafter, in Step 48, the charge power is set at the total charge power amount value En, and the charge is implemented for the N pieces of the electric vehicles placed ahead in the order of use.

As described above, in accordance with this vehicle management system, the charge levels of the electric vehicles 1 in which the deteriorated states are small or the charge levels of the electric vehicles 1 placed ahead in the order of use are decided to be the predetermined value or more, and accordingly, unexpected sudden running can be coped with. Moreover, in accordance with this vehicle management system, as mentioned above, the charge levels of the largely deteriorated electric vehicles 1 and the charge levels of the electric vehicles 1 placed behind in the order of use are set within the predetermined range, and at the same time, the charge levels of the less deteriorated electric vehicles 1 and of the electric vehicles 1 placed ahead in the order of use can be set at the predetermined value or more.

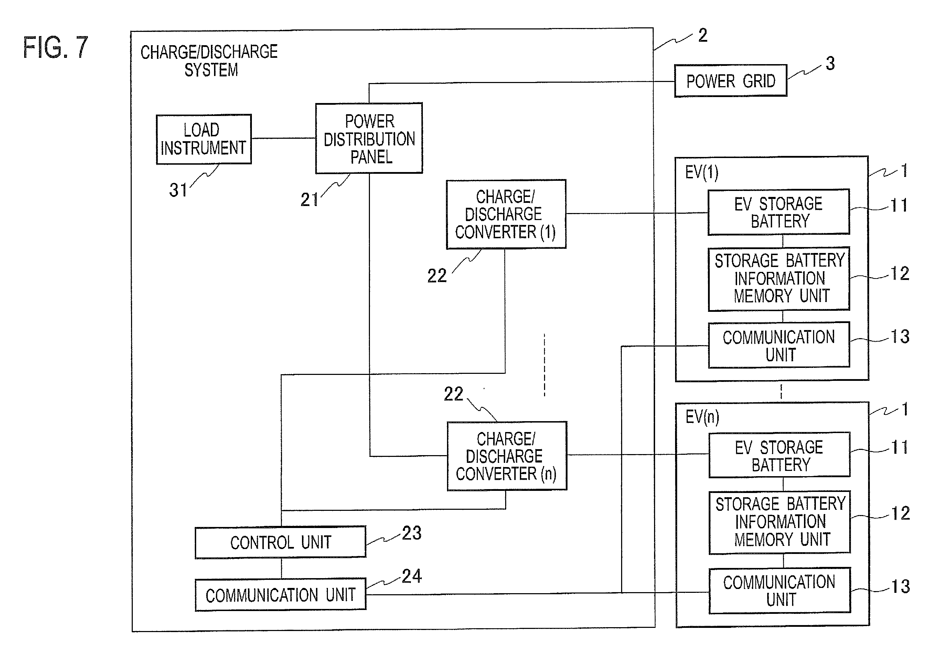

Moreover, desirably, as shown in FIG. 7, this vehicle management system includes a load instrument 31, discharges the EV storage batteries 11 in order to maintain the charge levels thereof within the predetermined range, and supplies the discharged power to the load instrument 31.

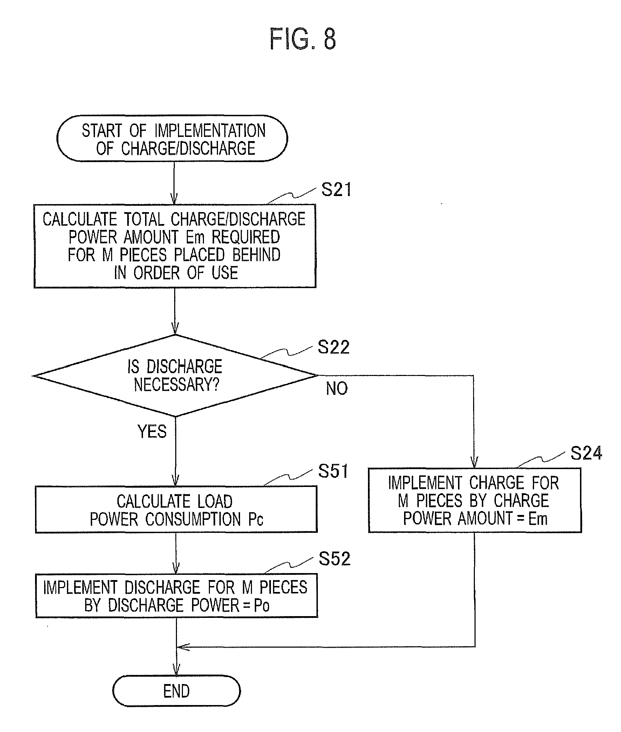

As shown in FIG. 8, the vehicle management system as described above calculates the total charge/discharge power amount value Em in Step S21 mentioned above, and advances the processing to Step S51 in a case where it is determined in Step S22 that it is necessary to discharge the M pieces of the electric vehicles 1 placed behind in the order of use.

In Step S51, the control unit 23 calculates power consumption (load power consumption Pc) of the load instrument 31.

In the next Step S52, the charge/discharge system 2 takes the load power consumption Pc, which is calculated in Step S51, as the discharge power of the EV storage batteries 11, and discharges the load power consumption Pc from the M pieces of the electric vehicles 1 placed behind in the order of use. In such a way, the charge/discharge system 2 can supply the discharge power of the electric vehicles 1 to the load instrument 31.

In accordance with the vehicle management system as described above, the power is discharged to the charge/discharge converters 22 in order to shift the charge levels of the EV storage batteries 11 to the predetermined range, whereby the charge levels can be shifted without allowing the power to flow reverse even if the charge power cannot be charged for the other electric vehicles 1 since the other electric vehicles 1 are fully charged. In such a way, in accordance with this vehicle management system, the lifetime deterioration of the EV storage batteries 11, which is caused by that the EV storage batteries 11 are left standing for a long period, can be reduced.

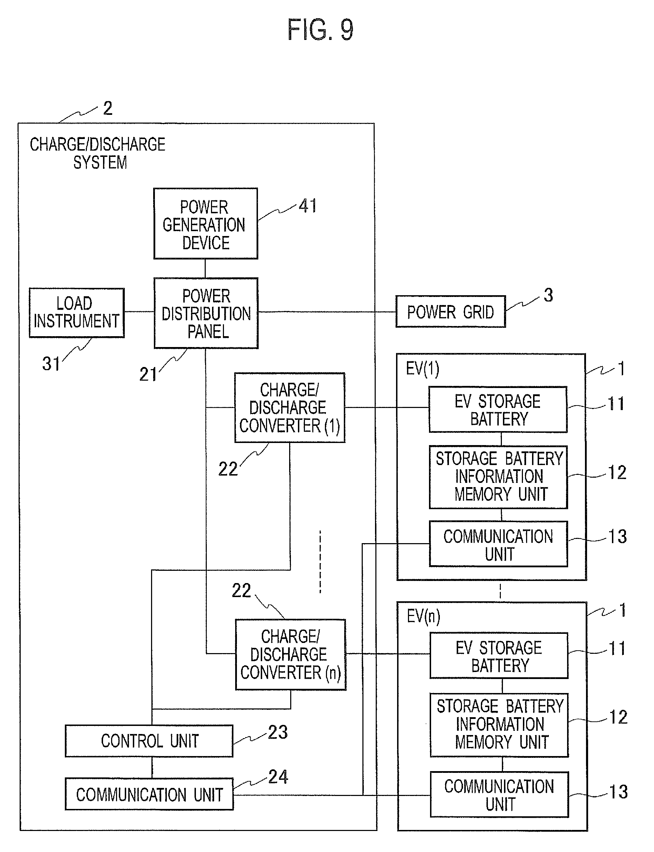

Moreover, desirably, as shown in FIG. 9, this vehicle management system includes a power generation device 41, and charges the power for maintaining the charge levels of the EV storage batteries 11 within the predetermined range from the power generation device 41 to the EV storage batteries 11. In such a way, the vehicle management system charges generated power in order to maintain the charge levels of the M pieces of the electric vehicles 1, which are placed behind in the order of use, within the predetermined range, or in order to maintain the charge levels of the N pieces of the electric vehicles 1, which are placed ahead in the order of use, at the predetermined value or more. In such a way, cost can be reduced.

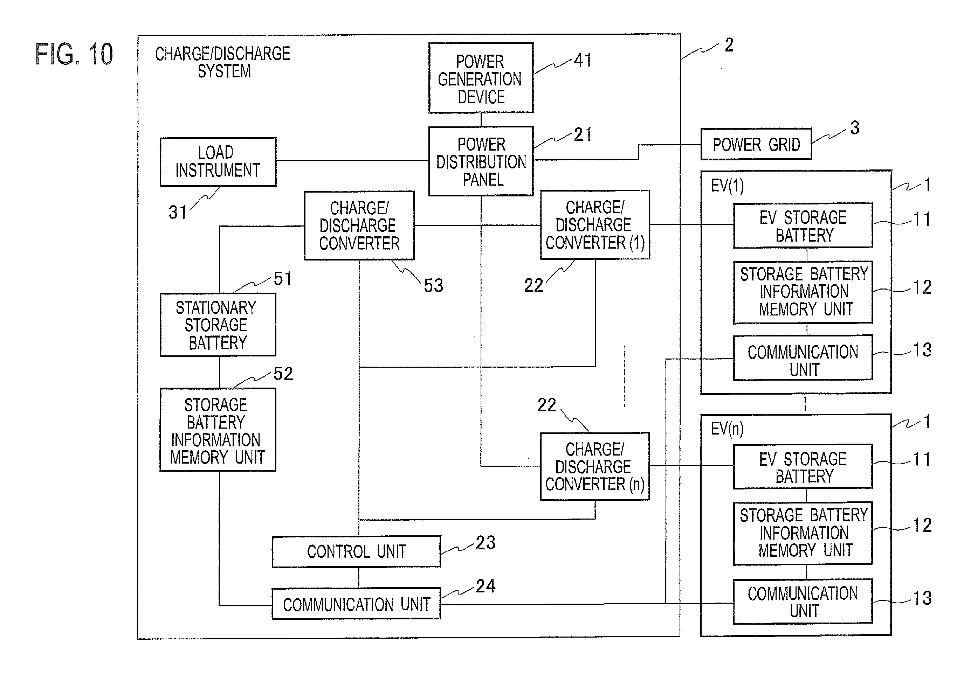

Furthermore, as shown in FIG. 10, this vehicle management system may include a stationary storage battery 51 fixed to a predetermined position. By the stationary storage battery 51, the charge/discharge system 2 can charge/discharge the power for maintaining the charge levels of the EV storage batteries 11 of the electric vehicles 1 within the predetermined range. In such a way, even in a case where the EV storage batteries 11 of the other electric vehicles 1 are fully charged or the number of such load instruments 31 is small, the vehicle management system can shift, at low cost, the charge levels without allowing the power to flow reverse.

Note that the above-mentioned embodiment is merely an example of the present invention. Therefore, the present invention is not limited to the above-mentioned embodiment, and as a matter of course, is changeable in various ways in response to design and the like even by adopting other embodiments as long as the other embodiments do not depart from the technical idea according to the present invention.

The entire contents of Japanese Patent Application No. 2011-254670 (filed on: November 22, 2011) are incorporated herein by reference.

### INDUSTRIAL APPLICABILITY

In accordance with the present invention, the electric vehicles are placed ahead more in the order of use as the deterioration of the electric vehicles is smaller, and accordingly, the variations among the lifetime deteriorations of the storage batteries in the plurality of electric vehicles can be suppressed.

### REFERENCE SIGNS LIST

- 1: ELECTRIC VEHICLE
- 11: EV STORAGE BATTERY
- 23: CONTROL UNIT (STATE DETECTING MEANS, ORDER-OF-USE DECIDING MEANS, CHARGE LEVEL DECIDING MEANS)
- 31: LOAD INSTRUMENT
- 41: POWER GENERATION DEVICE
- 51: STATIONARY STORAGE BATTERY

## Claims

1. A vehicle management system that manages a plurality of electric vehicles, comprising:
state detecting means for detecting deteriorated states of storage batteries of the plurality of electric vehicles;
order-of-use deciding means for deciding an order of use of the electric vehicles so that the electric vehicles can be placed ahead more in the order of use as the deteriorated states of the storage batteries of the electric vehicles are smaller, the deteriorated states being detected by the state detecting means; and
charge level deciding means for deciding charge levels of the storage batteries of the respective electric vehicles in response to the deteriorated states detected by the state detecting means or to the order of use, the order being decided by the order-of-use deciding means.

2. The vehicle management system according to claim 1, wherein the charge level deciding means decides charge levels of electric vehicles in which the deteriorated states detected by the state detecting means are large or charge levels of electric vehicles placed behind in the order of use, the order being decided by the order-of-use deciding means, within a predetermined range.

3. The vehicle management system according to either one of claims 1 and 2, wherein the charge level deciding means decides charge levels of electric vehicles in which the deteriorated states detected by the state detecting means are small or charge levels of electric vehicles placed ahead in the order of use, the order being decided by the order-of-use deciding means, at a predetermined value or more.

4. The vehicle management system according to either one of claims 2 and 3, further comprising:
a load instrument,
wherein power discharged for maintaining the charge levels of the storage batteries within the predetermined range is supplied to the load instrument.

5. The vehicle management system according to either one of claims 2 and 3, further comprising:
a power generation device,
wherein discharge power to the storage batteries, the discharge power being for maintaining the charge levels of the storage batteries within the predetermined range or at the predetermined value or more, is supplied from the power generation device.

6. The vehicle management system according to either one of claims 2 and 3, further comprising:
a stationary storage battery fixed to a predetermined position,
wherein power for maintaining the charge levels of the storage batteries within the predetermined range or at the predetermined value or more is charged/discharged by the stationary storage battery.
